# EUROPÄISCHE PATENTANMELDUNG

(11) **EP 3 875 194 A1**
(43) Veröffentlichungstag der Anmeldung: **08.09.2021**
(21) Anmeldenummer: 20161154.8
(22) Anmeldetag: 05.03.2020
(51) Int. Cl.: B23B 35/00, B23B 51/04, B23B 45/00, B28D 1/04, B28D 7/00

(54) **VERFAHREN ZUR ERMITTLUNG EINER EMPFEHLUNG EINES EINZULEGENDEN GANGES FÜR EIN KERNBOHRGERÄT, SOWIE KERNBOHRGERÄT**

(71) Anmelder: Hilti Aktiengesellschaft, 9494 Schaan (LI)
(72) Erfinder: Sattler, Christian, 87640 Biessenhofen (DE)
(74) Vertreter: Hilti Aktiengesellschaft Corporate Intellectual Property

(57) **Zusammenfassung**

Die vorliegende Erfindung betrifft ein Verfahren zur Ermittlung einer Empfehlung eines einzulegenden Ganges für ein Kernbohrgerät. Bei dem vorgeschlagenen Verfahren kann beispielsweise ein Abfall einer Drehzahl einer Bohrkrone des Kernbohrgeräts bei einem plötzlichen Ausschalten des Motors des Kernbohrgeräts verwendet, um den Durchmesser der Bohrkrone zu ermitteln. Alternativ kann der Durchmesser der Bohrkrone beim Anlaufen bzw. Hochfahren des Bohrgeräts bestimmt werden. Der Durchmesser der Bohrkrone wird dann als Grundlage für die Empfehlung des einzulegenden Ganges verwendet. In einem zweiten Aspekt betrifft die Erfindung ein Kernbohrgerät, mit dem das vorgeschlagene Verfahren durchgeführt werden kann.

## Beschreibung

Die vorliegende Erfindung betrifft ein Verfahren zur Ermittlung einer Empfehlung eines einzulegenden Ganges für ein Kernbohrgerät. Bei dem vorgeschlagenen Verfahren kann beispielsweise ein Abfall einer Drehzahl einer Bohrkrone des Kernbohrgeräts bei einem plötzlichen Ausschalten des Motors des Kernbohrgeräts verwendet werden, um den Durchmesser der Bohrkrone zu ermitteln. Alternativ kann der Durchmesser der Bohrkrone beim Anlaufen bzw. Hochfahren des Bohrgeräts bestimmt werden. Der Durchmesser der Bohrkrone wird dann als Grundlage für die Empfehlung des einzulegenden Ganges verwendet. In einem zweiten Aspekt betrifft die Erfindung ein Kernbohrgerät, mit dem das vorgeschlagene Verfahren durchgeführt werden kann.

### Hintergrund der Erfindung:

Im Stand der Technik sind Kernbohrgeräte bekannt, mit denen zylinderförmige Bohrkerne aus einem Untergrund, wie Beton oder Mauerwerk, herausgearbeitet werden können. Diese Kernbohrgeräte weisen Bohrkronen als Werkzeuge auf, wobei Bohrkronen mit unterschiedlichen Durchmessern verwendet werden können, um unterschiedliche große Bohrlöcher zu erzeugen. Es ist im Stand der Technik darüber hinaus bekannt, dass Kernbohrgeräte ein Getriebe aufweisen, damit ein Nutzer des Geräts einen Gang für den Betrieb des Kernbohrgeräts auswählen und einstellen können. Der Nutzer kann dabei den Gang entsprechend der Anforderungen der geplanten Bohrarbeit oder des Untergrundes auswählen. Bei den Überlegungen, die der Gangauswahl bzw. Gangeinstellung vorhergehen, können beispielsweise das gewünschte Drehmoment, der Durchmesser der zu verwendenden Bohrkrone oder eine gewünschte Drehzahl derselben eine Rolle spielen.

Tests haben allerdings gezeigt, dass Anwender von Kernbohrgeräten die Zuordnung von Bohrkronendurchmesser und ausgewähltem Gang häufig nicht oder nicht optimal vornehmen. Dies kann nachteiligerweise dazu führen, dass das Kernbohrgerät für eine spezifische Aufgabe mit einem nicht-optimalen Drehmoment und/oder einer nicht-optimalen Drehzahl der Bohrkrone arbeitet. Dadurch können sich Schwierigkeiten bei der Durchführung der Bohrarbeiten ergeben oder Verzögerungen auftreten. Auch kann die Qualität des Bohrergebnisses unter nicht-optimal eingestellten Gängen an dem Kernbohrgerät leiden.

Im Stand der Technik sind im Bereich der Kernbohrgerät keine adäquaten und leicht umzusetzenden Lösungen zur Erkennung des Bohrkronendurchmessers oder zur Visualisierung einer Gangempfehlung oder zur bevorzugt automatischen Gangwahl für Kernbohrgeräte bekannt.

Bisher muss sich der Anwender Informationen zur richtigen Gangwahl für die verwendeten Bohrkronendurchmesser selbst beschaffen. Oft werden Bohrkronen daher im falschen Gang verwendet bzw. es wird mit einer Bohrkrone in einem für den Bohrkronendurchmesser "falschen" Gang gebohrt. Dies kann nachteiligerweise zu einer verringerten Bohrgeschwindigkeit und/oder einer unerwünschten Lebensdauerverkürzung der Bohrkrone führen.

Die Aufgabe, die der vorliegenden Erfindung zugrunde liegt, besteht darin, dem Nutzer eines Kernbohrgeräts eine Empfehlung für eine optimale Gangauswahl an die Hand zu geben. Eine solche Gangauswahlempfehlung ist beispielweise bei Personenkraftwagen (PKW) bekannt, bei denen häufig am Display eine mit einem Pfeil versehene Anzeige erfolgt. Diese Anzeige kann beispielsweise zum Inhalt haben, welcher Gang gerade eingelegt ist und ob der aktuell eingelegte Gang im Lichte der aktuellen Motordrehzahl optimal für den Motor und/oder das Getriebe ist oder ob ein anderer Gang eingelegt werden soll. Die Gangauswahlempfehlung soll möglichst automatisch erfolgen und angezeigt werden, damit der Nutzer sie ohne großen Aufwand wahrnehmen und umsetzen kann. Der Erfindung liegt insbesondere die Aufgabe zugrunde, ein Verfahren für die Visualisierung eines empfohlenen Ganges bereitzustellen bzw. ein Verfahren zur bevorzugt automatischen Einstellung des für einen bestimmten Bohrkronendurchmesser optimalen Gang für die Arbeit mit dem Kernbohrgerät.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zur Ermittlung einer Empfehlung eines einzulegenden Ganges für ein Kernbohrgerät vorgesehen. Das Verfahren ist dadurch gekennzeichnet, dass eine Funktion n(t), die die Drehzahl n einer Bohrkrone des Kernbohrgeräts in Abhängigkeit von einer Zeit t beschreibt, verwendet wird, um einen Durchmesser der Bohrkrone des Kernbohrgeräts zu ermitteln, wobei der ermittelte Durchmesser der Bohrkrone als Grundlage für die Empfehlung des einzulegenden Ganges verwendet wird. In einer Ausgestaltung der Erfindung ist es bevorzugt, dass die Funktion n(t) einen Abfall der Drehzahl nach einem Ausschalten eines Motors des Kernbohrgeräts beschreibt. Mit anderen Worten wird bei dem vorgeschlagenen Verfahren ein Abfall der Drehzahl der Bohrkrone dazu verwendet, einen Durchmesser der Bohrkrone des Kernbohrgeräts zu ermitteln, wobei der ermittelte Durchmesser der Bohrkrone als Grundlage für die Empfehlung des einzulegenden Ganges verwendet wird. In dieser Ausgestaltung der Erfindung ist es bevorzugt, dass die Funktion n(t) während eines Betriebs des Kernbohrgeräts aufgenommen wird.

In einer alternativen Ausgestaltung der Erfindung kann es bevorzugt sein, dass der Motor des Kernbohrgeräts nicht ausgeschaltet wird, sondern dass eine Reduzierung des Antriebsmoments des Motors ausreichend ist, um die Rotationsenergie der Bohrkrone zu ermitteln. Es kann im Sinne der Erfindung ferner bevorzugt sein, dass die Rotationsenergie der Bohrkrone beim Hochlaufen des Motors ermittelt wird. In dieser Ausgestaltung der Erfindung ist es bevorzugt, dass die Funktion n(t) bei einem Anlaufen des Kernbohrgeräts aufgenommen wird. Diese Ausgestaltung der Erfindung ist besonders vorteilhaft, weil auf diese Weise die Durchführung des Verfahrens in den üblichen Arbeitsprozess beim Umgang mit einem Bohrgerät integriert werden kann. Der Nutzer nimmt vorzugsweise keine Verzögerung im Arbeitsablauf wahr und fühlt sich weniger gestört oder von der Arbeit abgehalten. Dies erhöht die Arbeitseffizienz bei der Arbeit mit dem vorgeschlagenen Bohrgerät, das dazu eingerichtet ist, das vorgeschlagene Verfahren umzusetzen. Es ist im Sinne der Erfindung ganz besonders bevorzugt, dass die Änderung der Drehzahl der Bohrkrone ermittelt wird, um die Rotationsenergie der Bohrkrone daraus abzuleiten.

Die Erfindung betrifft insbesondere eine Methode zur automatischen Erkennung des Bohrkronendurchmessers bei Kernbohrgeräten, sowie eine Anzeige und/oder Verarbeitung dieser Information. Mit dieser Information ist es möglich, dem Anwender eine Empfehlung für die Gangwahl am Kernbohrgeräte zu geben und damit die Bohrgeschwindigkeit und/oder die Lebensdauer der Bohrkrone zu verbessern. Tests haben gezeigt, dass mit dem vorgeschlagenen Verfahren die für Bohrperformance des Kembohrgeräts erheblich verbessert werden kann. Die Erkennung des Bohrkronendurchmessers kann vorzugsweise dazu verwendet werden, dem Nutzer des Kernbohrgeräts eine optimale Gangwahlempfehlung für die Arbeit mit dem Kernbohrgerät anzubieten.

Es stellt einen wesentlichen Vorteil der Erfindung dar, dass für den Nutzer des Kernbohrgeräts eine Empfehlung zur "richtigen" Gangwahl für den verwendeten Bohrkronendurchmesser visualisiert wird. Dabei kann der für den verwendeten Bohrkronendurchmesser "richtige" bzw. optimale Gang in Bezug auf Drehzahl und/oder Drehmoment vorteilhafterweise automatisch vom Kernbohrgerät ausgewählt und/oder eingestellt werden.

Ein besonderer Vorteil der Erfindung besteht darin, dass mit dem vorgeschlagenen Verfahren bestehende Messgrößen in einem Messzyklus verwendet werden, um eine Gangauswahlempfehlung anzugeben. Der Begriff «Messzyklus» steht in diesem Zusammenhang bevorzugt für die Zeitspanne, während der die Rotationsenergie der Bohrkrone ermittelt wird, um daraus den Bohrkronendurchmesser herzuleiten.

Der Begriff «bestehende Messgröße» bedeutet im Sinne der Erfindung bevorzugt, dass es sich um Messgrößen handelt, die unabhängig von dem vorgeschlagenen Verfahren von dem Kernbohrgerät ermittelt werden. Ein Beispiel für eine bestehende Messgröße ist beispielsweise die Drehzahl der Bohrkrone des Kernbohrgeräts. Vorzugsweise können die bestehenden Messgrößen ausgewertet werden, um zu der Gangauswahlempfehlung für den Nutzer des Kernbohrgeräts zu gelangen. Vorteilhafterweise ist das vorgeschlagene Verfahren mit der bestehenden, d.h. mit der vorhandenen Antriebs-Hardware umsetzbar, da bei der Durchführung des vorgeschlagenen Verfahrens vorzugsweise lediglich ein Steuerungsverfahren, das zur Steuerung des Kernbohrgeräts verwendet wird, geändert wird. Mit anderen Worten kann es im Kontext der vorliegenden Erfindung bevorzugt sein, eine Steuerungs-Software des Kernbohrgeräts anzupassen, um eine Gangauswahlempfehlung zu ermitteln und anzuzeigen.

Die hier vorgestellte Lösung stellt insbesondere eine Methode zur bevorzugt automatischen Erkennung des Bohrkronendurchmessers dar, um daraus einen für den ermittelten Bohrkronendurchmesser optimalen Gang für den Betrieb des Kernbohrgeräts ableiten zu können. Das vorgeschlagene Verfahren nutzt vorzugsweise die Messgröße "Drehzahl" in Verbindung mit einem definierten Messzyklus aus. Bestandteil dieses Messzyklus ist insbesondere eine kurze Zeitspanne Δt, in der das Kernbohrgerät bzw. der Motor des Kernbohrgeräts ausgeschaltet wird. Grundlage für das vorgeschlagene Verfahren ist die über die Bohrkronendurchmesser stark unterschiedliche Rotationsenergie auf Grund der stark unterschiedlichen Trägheitsmomente. Diese gut messbaren und zugänglichen bestehenden Messgrößen werden im Sinne des vorgeschlagenen Verfahrens verwendet, um einen für den ermittelten Bohrkronendurchmesser optimalen Gang für den Betrieb des Kernbohrgeräts zu bestimmen.

Es ist im Sinne der Erfindung bevorzugt, dass für den Messzyklus der Motor des Gerätes für eine definierte Zeitspanne Δt ausgeschaltet wird, so dass eine Sprungfunktion an der Drehzahlfunktion beobachtet und die Reaktion des Systems anhand des Drehzahlabfalls betrachtet werden kann. Die Reaktion des Kernbohrgeräts umfasst insbesondere eine negative Beschleunigung, die im Sinne der Erfindung bevorzugt als Drehzahlabfall bezeichnet wird. Es ist im Sinne der Erfindung bevorzugt, dass die negative Beschleunigung durch das kurzfristige Ausschalten des Motors des Kernbohrgeräts hervorgerufen wird.

Ein weiterer Vorteil der Erfindung besteht darin, dass keine Systembindung besteht. Dies bedeutet im Sinne der Erfindung bevorzugt, dass der Durchmesser einer Bohrkrone vorteilhafterweise unabhängig vom Hersteller der Bohrkrone durchgeführt werden kann.

In einer besonders bevorzugten Ausgestaltung betrifft die Erfindung ein Verfahren zur Ermittlung einer Empfehlung eines einzulegenden Ganges für ein Kernbohrgerät, wobei das Verfahren durch folgende Verfahrensschritte gekennzeichnet wird:
a) Betrieb eines Kernbohrgerät mit einer Bohrkrone als Werkzeug,
b) Abschalten des Kernbohrgeräts für eine vorgegebene Zeitspanne Δt,
c) Aufzeichnen der Drehzahl n der Bohrkrone in Abhängigkeit von einer Zeit t, wodurch eine Funktion n(t) erhalten wird,
d) Auswertung der Funktion n(t),
e) Ermittlung eines Durchmessers der Bohrkrone auf Grundlage der ausgewerteten Funktion n(t),
f) Erstellung und/oder Anzeige einer Empfehlung für einen einzulegenden Gang für das Kernbohrgerät auf Grundlage des ermittelten Durchmessers der Bohrkrone.

Der Erfindung liegt die Idee zugrunde, dass der Motor des Kernbohrgeräts für eine definierte Zeitspanne Δt ausgeschaltet wird, so dass es zu einer Sprungfunktion in der Auftragung der Drehzahl n gegenüber der Zeit t kommt. Üblicherweise wird es durch das Ausschalten des Motors des Kernbohrgeräts zu einem Abfall der Drehzahl der Bohrkrone des Kernbohrgeräts kommen. Die Art und Weise, wie die Drehzahl abfällt, kann vorzugsweise dazu verwendet werden, zu einer Gangauswahlempfehlung zu gelangen, die dem Nutzer des Kernbohrgeräts angezeigt werden kann. Mit anderen Worten kann die Reaktion des Kernbohrsystems anhand des Drehzahlabfalls betrachtet werden, um den Bohrkronendurchmesser zu bestimmen und eine Gangempfehlung für das Kernbohrgerät abzuleiten.

Es ist im Sinne der Erfindung insbesondere bevorzugt, dass der Abfall der Drehzahl n der Bohrkrone ausgewertet wird. Vorzugsweise kann dieser Drehzahlabfall durch das Abschalten des Motors des Kernbohrgeräts bewirkt werden. Der Bohrkronendurchmesser kann dann vorzugsweise auf Grundlage des aufgezeichneten und/oder analysierten Drehzahlabfalls ermittelt bzw. abgeleitet werden. In einem nachfolgenden Verfahrensschritt kann eine Empfehlung für den einzulegenden Gang für das Kernbohrgerät erstellt und/oder an dem Gerät angezeigt werden. Dazu kann das Kernbohrgerät beispielsweise entsprechende Anzeigemittel, wie ein Display, einen Monitor, einen Touchscreen oder optische Anzeigemittel, wie LED oder Hinweislämpchen in unterschiedlichen Farben umfassen.

Die Drehzahl der Bohrkrone ist bei einem Kernbohrgerät über das Trägheitsmoment J und die Rotationsenergie Er mit der vierten Potenz des Durchmessers der Bohrkrone verknüpft. Dadurch wird es ermöglicht, dass mit dem vorgeschlagenen Verfahren in Abhängigkeit von der verwendeten Bohrkrone und des damit verbundenen Trägheitsmoments J unterschiedliche Verläufe der Drehzahlfunktion n(t) gemessen werden können. Insbesondere ergeben sich unterschiedliche Verläufe für den Drehzahlabfall in Abhängigkeit von dem Durchmesser der Bohrkrone, die gerade als Werkzeug an dem Kernbohrgerät verwendet wird. Aufgrund der Abhängigkeit der Rotationsenergie Er von der vierten Potenz des Bohrkronendurchmessers ergeben sich bereits bei kleinen Unterschieden des Durchmessers der zu unterscheidenden Bohrkronen deutliche Unterschiede in der Rotationsenergie Er. Der Erfinder hat erkannt, dass sich dieser Umstand in der Drehzahlantwort am Kernbohrgerät abbildet bzw. widerspiegelt, so dass die Drehzahlantwort des Kernbohrgeräts bei einem kurzen Ausschalten oder beim Hochfahren bzw. Anlaufen des Geräts dazu verwendet werden kann, eine Gangwahlempfehlung abzuleiten und für den Nutzer anzuzeigen. Vorzugsweise kann die Drehzahlantwort des Kernbohrgeräts durch die Funktion n(t) beschrieben werden.

Es ist im Sinne der Erfindung bevorzugt, dass die Ermittlung des Durchmessers der Bohrkrone unter Verwendung von Look-Up-Tabellen erfolgt. Dabei werden die bei der Durchführung des Verfahrens ermittelten Daten mit einer Look-Up-Tabelle verglichen und anhand des Vergleichs die Bohrkronendurchmesser abgeleitet. Die Look-Up-Tabellen können in einer Speichereinrichtung des Bohrgeräts hinterlegt sein. Die Look-Up-Tabellen können aber auch in einer Cloud oder auf einem Server hinterlegt sein. In diesem Fall ist es bevorzugt, dass das Bohrgerät über Kommunikationsmittel verfügt, die dazu eingerichtet sind, dass das Bohrgerät mit der Cloud und/oder dem Server eine Kommunikationsverbindung eingeht, d.h. mit der Cloud und/oder dem Server kommunizieren kann.

Es ist im Sinne der Erfindung bevorzugt, dass die Zeitspanne Δt in einem Bereich von 0,1 bis 5 s liegt, vorzugsweise in einem Bereich von 0,25 bis 2 s, besonders bevorzugt in einem Bereich von 0,4 bis 1 s und am meisten bevorzugt bei 0,5 s. Mit anderen Worten kann der Motor des Kernbohrgeräts beispielsweise für eine Zeitspanne von 0,1 bis 5 s, vorzugsweise von 0,25 bis 2 s, besonders bevorzugt für eine Zeitspanne von 0,4 bis 1 s und am meisten bevorzugt für eine Zeitspanne von 0,5 s ausgeschaltet werden, um die nachfolgende Änderung der Drehzahlfunktion n(t) zu analysieren. Dabei hat sich eine Zeitspanne von ca. 0,5 s als besonders geeignet erwiesen, um eine optimale Gangwahlempfehlung abzuleiten. Es ist im Sinne der Erfindung insbesondere bevorzugt, dass das Abschalten des Kernbohrgeräts durch ein Abschalten seines Motors erfolgt. Es ist im Sinne der Erfindung bevorzugt, dass die Zeitspanne Δt möglichst klein gehalten wird und insbesondere kürzer als 1 s ist. Beispielsweise können Zeitspannen zwischen 200 bis 500 ms besonders bevorzugt sein. Beispielsweise können Messzyklen durchgeführt werden, bei denen zum Beispiel je 10 Einzelmessungen durchgeführt werden. Die Dauer einer Einzelmessung kann beispielsweise 20 ms dauern, so dass eine Zeitspanne Δt von ca. 200 ms erreicht wird. Der Vorteil einer möglichst kurzen Zeitspanne Δt liegt darin, dass der Messzyklus dann von einem Nutzer des Bohrgeräts kaum wahrgenommen bzw. als störend oder als Verzögerung empfunden wird.

Es ist im Sinne der Erfindung bevorzugt, dass das Kernbohrgerät vor dem Abschalten in einer Drehzahlregelung betrieben wird. Vorzugsweise wird das Kernbohrgerät vor dem Abschalten des Motors des Kernbohrgeräts in einer Drehzahlregelung betrieben.

In einem zweiten Aspekt betrifft die Erfindung ein Kernbohrgerät zur Durchführung des vorgeschlagenen Verfahrens, wobei das Kernbohrgerät eine Bohrkrone als Werkzeug aufweist. Das Kernbohrgerät ist dadurch gekennzeichnet, dass eine Empfehlung für einen einzulegenden Gang für ein Kernbohrgerät und/oder ein Durchmesser der Bohrkrone des Kernbohrgeräts durch eine Auswertung einer Funktion n(t) der Drehzahl n der Bohrkrone in Abhängigkeit von einer Zeit ermittelbar ist. Es ist im Sinne der Erfindung ganz besonders bevorzugt, dass ein Abfall der Drehzahl der Bohrkrone des Kernbohrgeräts verwendet wird, um einen einzulegenden Gang für das Kernbohrgerät und/oder den Durchmesser der Bohrkrone des Kernbohrgeräts zu ermitteln. Die für das vorgeschlagene Verfahren eingeführten Begriffe, Definitionen und technischen Vorteile gelten vorzugsweise auch für das vorgeschlagene Kernbohrgerät analog.

### Ausführungsbeispiel der Erfindung:

Es ist im Sinne der Erfindung bevorzugt, dass für die Erkennung des Bohrkronendurchmessers unter Verwendung einer Drehzahlmessung in einem Messzyklus die Bohrkrone fest in der Werkzeugaufnahme des Kernbohrgeräts montiert vorliegt. Vorzugsweise ist die Bohrkrone frei von Bohrrückständen. Ferner ist es bevorzugt, dass das Kernbohrgeräts in der Drehzahlregelung betrieben wird und die Bohrkrone im Wesentlichen frei von äußeren Lasten dreht. Darüber hinaus ist es im Sinne der Erfindung bevorzugt, dass die Länge und die Wanddicke der zu unterscheidenden Bohrkronen in bestimmten Grenzen ähnlich zueinander sind.

Der Motor des Gerätes wird vorzugsweise für eine definierte Zeitspanne Δt ausgeschaltet, so dass ein Sprung in der Drehzahlfunktion n(t) beobachtet werden kann. Vorzugsweise kann dadurch die Reaktion des Kernbohrsystems auf das kurzzeitige Ausschalten des Kernbohrgeräts anhand des Drehzahlabfalls betrachtet werden.

In Abhängigkeit des verwendeten Bohrkronendurchmessers und des damit verbundenen Trägheitsmomentes J kann ein unterschiedlicher Drehzahlabfall gemessen werden. Wegen der Abhängigkeit der Rotationsenergie Er von der vierten Potenz des Bohrkronendurchmessers können bereits bei kleinen Durchmesserunterschieden der Bohrkronen deutliche Unterschiede in der Rotationsenergie Er festgestellt werden. Tests haben gezeigt, dass sich diese deutlichen Unterschiede vorteilhafterweise in der Drehzahlantwort am Kernbohrgerät abbilden.

Der Erfinder hat erkannt, dass sich die unterschiedlichen Trägheitsmomente in Form eines Abfalls der Drehzahl der Bohrkrone auswirken, so dass sie im Rahmen des vorgeschlagenen Verfahrens einfach gemessen und ausgewertet werden können, um einen optimalen Gang für das Kernbohrgerät zu empfehlen. Es hat sich gezeigt, dass das System mit Erweiterung der Durchmessergrenzen weniger kritisch in Bezug auf die Länge der Bohrkrone wird.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

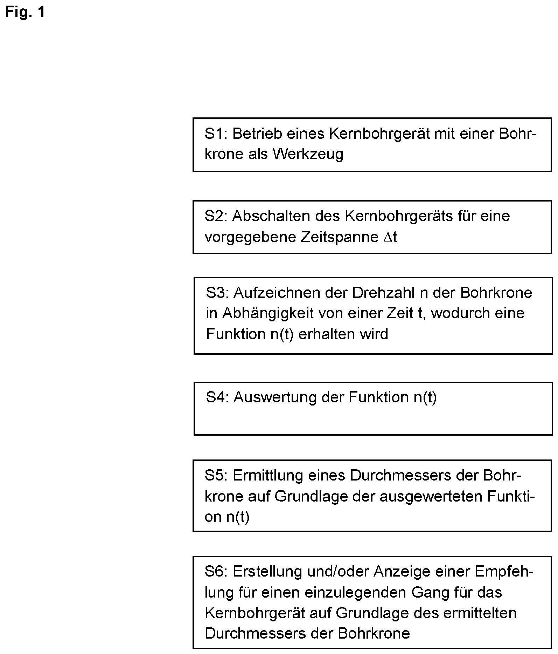

- Fig. 1: Ansicht einer bevorzugten Ausgestaltung der Erfindung

### Figurenbeschreibung:

Figur 1 zeigt eine bevorzugte Ausgestaltung der Erfindung. Insbesondere zeigt Fig. 1 eine Ausgestaltung der Erfindung, bei der die Funktion n(t) während eines Betriebs des Kernbohrgeräts aufgenommen wird. Eine bevorzugte Ausführungsform dieses Verfahrens kann beispielsweise die Verfahrensschritte S1 bis S6 aufweisen. Bei einem ersten Verfahrensschritt S1 wird ein Kernbohrgerät mit einer Bohrkrone als Werkzeug betrieben. In einem zweiten Verfahrensschritt S2 wird das Kernbohrgerät für eine vorgegebene Zeitspanne Δt abgeschaltet. Dabei wird in einem dritten Verfahrensschritt S3 die Drehzahl n der Bohrkrone in Abhängigkeit von einer Zeit t aufgezeichnet, so dass eine Funktion n(t) erhalten wird. In einem vierten Verfahrensschritt S4 wird diese Funktion n(t), die den Verlauf der Drehzahl gegenüber der Zeit beschreibt, ausgewertet. Dies kann unter Verwendung von mathematischen Operationen oder durch die Hinzuziehung von Look-Up-Tabellen erfolgen. Durch die Auswertung der Funktion n(t) kann in einem fünften Verfahrensschritt S5 der Durchmesser der Bohrkrone ermittelt werden. Vorteilhafterweise kann anschließend in einem sechsten Verfahrensschritt S6 eine Empfehlung für einen einzulegenden Gang für das Kernbohrgerät auf Grundlage des ermittelten Durchmessers der Bohrkrone ermittelt werden. Ferner kann diese Gangzahlempfehlung mit den entsprechenden Anzeigemitteln am Bohrgerät angezeigt werden.

In einer alternativen Ausführungsform der Erfindung (nicht dargestellt) kann die Funktion n(t) bei einem Anlaufen des Kernbohrgeräts aufgenommen werden.

## Patentansprüche

1. Verfahren zur Ermittlung einer Empfehlung eines einzulegenden Ganges für ein Kernbohrgerät, wobei eine Funktion n(t), die die Drehzahl n einer Bohrkrone des Kernbohrgeräts in Abhängigkeit von einer Zeit t beschreibt, verwendet wird, um einen Durchmesser der Bohrkrone des Kernbohrgeräts zu ermitteln, wobei der ermittelte Durchmesser der Bohrkrone als Grundlage für die Empfehlung des einzulegenden Ganges verwendet wird.

2. Verfahren nach Anspruch 1,
**dadurch gekennzeichnet, dass**
die Funktion n(t) bei einem Anlaufen des Kernbohrgeräts aufgenommen wird.

3. Verfahren nach Anspruch 1,
**dadurch gekennzeichnet, dass**
die Funktion n(t) während eines Betriebs des Kernbohrgeräts aufgenommen wird.

4. Verfahren nach Anspruch 3, wobei das Verfahren durch die folgenden Verfahrensschritte **gekennzeichnet wird:**
a) Betrieb eines Kernbohrgerät mit einer Bohrkrone als Werkzeug,
b) Abschalten des Kernbohrgeräts für eine vorgegebene Zeitspanne Δt,
c) Aufzeichnen der Drehzahl n der Bohrkrone in Abhängigkeit von einer Zeit t, wodurch eine Funktion n(t) erhalten wird,
d) Auswertung der Funktion n(t),
e) Ermittlung eines Durchmessers der Bohrkrone auf Grundlage der ausgewerteten Funktion n(t),
f) Erstellung und/oder Anzeige einer Empfehlung für einen einzulegenden Gang für das Kernbohrgerät auf Grundlage des ermittelten Durchmessers der Bohrkrone.

5. Verfahren nach Anspruch 3 oder 4
**dadurch gekennzeichnet, dass**
die Funktion n(t) einen Abfall der Drehzahl nach einem Ausschalten eines Motors des Kernbohrgeräts beschreibt.

6. Verfahren nach einem der Ansprüche 4 oder 5
**dadurch gekennzeichnet, dass**
die Zeitspanne Δt in einem Bereich von 0,1 bis 5 s liegt, vorzugsweise in einem Bereich von 0,25 bis 2 s, besonders bevorzugt in einem Bereich von 0,4 bis 1 s und am meisten bevorzugt bei 0,5 s.

7. Verfahren nach einem der Ansprüche 3 bis 6
**dadurch gekennzeichnet, dass**
das Kernbohrgerät vor dem Abschalten in einer Drehzahlregelung betrieben wird.

8. Kernbohrgerät zur Durchführung des Verfahrens nach einem der vorhergehenden Ansprüche, wobei das Kernbohrgerät eine Bohrkrone als Werkzeug aufweist,
**dadurch gekennzeichnet, dass**
eine Empfehlung für einen einzulegenden Gang für ein Kernbohrgerät und/oder ein Durchmesser der Bohrkrone des Kernbohrgeräts durch eine Auswertung einer Funktion n(t) der Drehzahl n der Bohrkrone in Abhängigkeit von einer Zeit t ermittelbar ist.
